# EUROPÄISCHE PATENTANMELDUNG

(11) **EP 1 000 911 A2**
(43) Veröffentlichungstag der Anmeldung: **17.05.2000**
(21) Anmeldenummer: 99890328.0
(22) Anmeldetag: 19.10.1999
(51) Int. Cl.: C04B 7/52

(54) **Verfahren zum Mahlen von Klinker**

(30) Priorität: 11.11.1998 AT 74398 U
(71) Anmelder: HOLDERBANK FINANCIERE GLARUS AG, CH-8750 Glarus (CH)
(72) Erfinder: Edlinger, Alfred Dipl.Ing., 5400 Baden (CH)
(74) Vertreter: Haffner, Thomas M., Dr.

(57) **Zusammenfassung**

Bei einem Verfahren zum Mahlen von Klinker aus einem Klinkerofen (2), bei welchem der Klinker über einen Klinkerkühler (1) geführt und einer Strahlmühle (6) aufgegeben wird, wird die Kühlluft des Klinkerkühlers (1) als erhitzte Verbrennungsluft dem Klinkerofen (2) rückgeführt, wobei der gekühlte Klinker bei Temperaturen von über 250° C einer Dampfstrahlmühle (6) aufgegeben wird. Der aus der Strahlmühle (6) abgezogene Dampf wird über einen Wärmetauscher (15) zur Erhitzung von Speisewasser für die Dampfstrahlmühle (6) geführt und kondensiert, wobei das erhitzte Speisewasser mit den Verbrennungsabgasen des Klinkerofens (2) verdampft und in die Dampfstrahlmühle (6) eingespeist wird.

## Beschreibung

Die Erfindung bezieht sich auf ein Verfahren zum Mahlen von Klinker aus einem Klinkerofen, bei welchem der Klinker über einen Klinkerkühler geführt wird und einer Strahlmühle aufgegeben wird, wobei die Kühlluft des Klinkerkühlers als erhitzte Verbrennungsluft dem Klinkerofen rückgeführt wird.

Für das Mahlen von Klinker wurde bereits vorgeschlagen Strahlmühlen eingezusetzen. Derartige Strahlmühlen, welche häufig als Gegenstrahlmühlen gebaut sind, werden üblicherweise mit Preßluft betrieben, wobei das in derartigen Strahlmühlen gemahlene Gut über einen Sichter aus dem Mahlraum ausgetragen wird. Das über den Sichter abgezogene Material kann in der Folge je nach Mahlgut und Mahlzeit sowie naturgemäß je nach Art der Düsen bzw. des angewandten Luftdruckes unterschiedlich fein abgezogen, wobei Grobgut vom Sichter in den Mahlraum zurückgeschleudert wird.

Neben der Verwendung von Preßluft wurde bereits vorgeschlagen derartige Strahlmühlen mit Verbrennungsabgasen von Brennkraftmaschinen zu betreiben. Zur Erhöhung der Effizienz wurde weiters bereits vorgeschlagen gemeinsam mit derartigen Verbrennungsabgasen Wasser oder Wasserdampf einzudüsen. Insbesondere zum Vermahlen von flüssigen Schlacken wurde bereits vorgeschlagen unmittelbar Wasser gemeinsam mit flüssigen Schlacken über Düsen auszutragen, wobei durch die explosionsartige Verdampfung eine entsprechende kinetische Energie an die erstarrenden Schlackentröpfchen vermittelt werden kann.

Wenn das Ausgangsprodukt bereits als Feststoff vorliegt, wurde allerdings aus energetischen Gründen in der Regel Wasserdampf als alleiniges Treibmittel für eine Strahlmühle nicht in Betracht gezogen. Wasserdampf kühlt beim Einblasen in abgekühltes körniges Mahlgut ab, sodaß es zu Kondensationen im Inneren des Mahlraumes kommen kann, was insbesondere im Falle eines Mahlens zur Herstellung von Zement unerwünscht ist. Die für eine entsprechend feine Vermahlung benötigte hohe Dampfmenge und das erforderliche hohe Temperaturniveau hat somit die Verwendung von Wasserdampf für den Betrieb von Strahlmühlen bisher nicht als aussichtsreich erscheinen lassen.

Die Erfindung zielt nun darauf ab, ein Verfahren der eingangs genannten Art zu schaffen, bei welchem ausgehend von der bekannten Herstellung von Klinker ein zusätzliches Einbringen von Energie weitestgehend entbehrlich ist und die für den Betrieb der Strahlmühle erforderlichen Treibgase in hohem Maße im Kreislauf geführt werden können. Zur Lösung dieser Aufgabe besteht das erfindungsgemäße Verfahren darin, daß der gekühlte Klinker bei Temperaturen von über 250° C einer Dampfstrahlmühle aufgegeben wird, daß der aus der Strahlmühle abgezogene Dampf über einen Wärmetauscher zur Erhitzung von Speisewasser für die Dampfstrahlmühle geführt und kondensiert wird und daß das erhitzte Speisewasser mit den Verbrennungsabgasen des Klinkerofens verdampft und in die Dampfstrahlmühle eingespeist wird. Vorausgesetzt wird somit für die wirtschaftliche Betriebsweise des erfindungsgemäßen Verfahrens, daß die Strahlmühle in unmittelbarer Nähe des Klinkerofens und des Klinkerkühlers angeordnet ist, sodaß die Restwärme der den Klinkerofen verlassenden Gase und der Kühlgase genutzt werden kann. Weitere Voraussetzung für die wirtschaftliche Betriebsweise des erfindungsgemäßen Verfahrens ist hiebei, daß der gekühlte Klinker nicht wie üblich bei entsprechend tiefen Temperaturen aus dem Klinkerkühler ausgetragen wird, sondern vielmehr bei Temperaturen von über 250° C in die Dampfstrahlmühle eingebracht wird. Wenn die Dampfstrahlmühle darüberhinaus noch entsprechend isoliert wird, können thermische Verluste sehr gering gehalten werden. Dadurch, daß nun die Kühlluft des Klinkerkühlers als erhitzte Verbrennungsluft dem Klinkerofen rückgeführt wird, läßt sich insgesamt die Wirtschaftlichkeit des Verfahrens in einem Ausmaß steigern, daß der Betrieb der nachgeschalteten Dampfstrahlmühle ohne zusätzliches Energieeinbringen ermöglicht wird. Die den Klinkerkühler verlassende heiße Luft eignet sich hervorragend als Verbrennungsluft für den Klinkerofen, wobei eine Teilmenge dieser heißen Kühlluft auch für die Aufrechterhaltung der Dampftemperatur und die Dampferzeugung herangezogen werden kann. Für die Dampferzeugung können aber unmittelbar auch die dem Klinkerofen verlassenden Verbrennungsabgase herangezogen werden, wobei darüberhinaus der aus der Strahlmühle abgezogene Dampf über einen Wärmetauscher zur Erhitzung von Speisewasser für die Dampfstrahlmühle geführt werden kann und selbst wiederum kondensiert werden kann. Das kondensierte Wasser kann dem Speisewasser zugemischt werden und in einfacher Weise unter Druck gesetzt werden, um das erforderliche Druckniveau aufrechtzuerhalten. Die für die Aufrechterhaltung des erforderlichen Druckniveaus erforderliche Energie ist hierbei vergleichsweise gering, da es genügt, daß erhitzte Speisewasser entsprechend unter Druck zu setzen, wobei bevorzugt so vorgegangen wird, daß das Speisewasser sowie gegebenenfalls zusätzlich das Kondensat für die Dampferzeugung unter einen Druck von 10 bis 35 bar gesetzt wird. Ein derartiges Druckwasser kann unter Verwendung der heißen Kühlluft des Klinkerkühlers sowie der Verbrennungsabgase des Klinkerofens leicht verdampft werden, sodaß die Abwärme wirkungsvoll genutzt werden kann. Dies ergibt sich nicht zuletzt daraus, daß eine Kühlung des Klinkers im Klinkerkühler auf Temperaturen unter 250° C jedenfalls vermieden wird, sodaß ein entsprechend hohes Temperaturniveau zur Verfügung steht, welches eine rasche Erhitzung und eine rasche Verdampfung gewährleistet. Insgesamt ergibt sich somit durch die Kombination der Dampfstrahlmühle mit einem Klinkerkühler und einem Klinkerofen ein in sich geschlossenes System, in welchem die Abwärme weitestgehend genutzt werden kann, wobei gleichzeitig aufgrund des entsprechend höheren Temperaturniveaus auch eine entsprechend vorgewärmte Verbrennungsluft für den Klinkerofen zur Verfügung steht. Der Dampf kann nach dem Verlassen der Dampfstrahlmühle kondensiert werden und gleichfalls im Kreislauf geführt werden, sodaß neben einer optimalen energetischen Nutzung auch die Umweltbelastung wesentlich herabgesetzt werden kann. In vorteilhafter Weise wird das geforderte Temperaturniveau dadurch aufrechterhalten, daß der gekühlte Klinker bei Temperaturen zwischen 300° C und 500° C in die Gegenstrahlmühle eingeschleust wird.

Mit Vorteil wird das erfindungsgemäße Verfahren so durchgeführt, daß die Verbrennungsabgase des Klinkerofens gegebenenfalls gemeinsam mit Zusatzbrennstoff zur Verdampfung des Speisewassers nachverbrannt bzw. verbrannt werden. Je nach Verbrennungsgrad können die den Klinkerofen verlassenden Verbrennungsabgase noch ein entsprechend hohes Ausmaß an chemischer Wärme enthalten, welche durch Nachverbrennung bzw. Verbrennung genutzt werden kann. Insgesamt wird der Mahlvorgang bei der erfindungsgemäßen Verfahrensweise aufgrund des relativ hohen Temperaturniveaus des eingebrachten gekühlten Klinkers weitestgehend isenthalpisch betrieben, sodaß genaugenommen im wesentlichen nur diejenige Energie ersetzt werden muß, welche für die Mahlarbeit verbraucht wurde. Der irreversible Anteil dieser Energie, d.h. im wesentlichen die Entropievermehrung, muß in der Folge durch zusätzliches Energieeinbringen kompensiert werden, welches in dem den Klinkerkühler und den Klinkerofen enthaltenden System zur Verfügung steht. Insgesamt wird bei einer derartigen Verfahrensweise der Wirkungsgrad der Dampfstrahlmühle wesentlich verbessert, sodaß in der vorgeschlagenen Kombination eine wirtschaftliche Betriebsweise ermöglicht wird.

Mit Vorteil wird das erfindungsgemäße Verfahren so durchgeführt, daß die Kühlluft des Klinkerkühlers bei Temperaturen von über 900° C, vorzugsweise über 1000° C, aus dem Kühler abgezogen und dem Klinkerofen sowie gegebenenfalls der Dampferzeugung mit der fühlbaren Wärme als Verbrennungsluft zugeführt wird. Eine besonders vorteilhafte Verfahrensweise ergibt sich, wenn als Dampfstrahlmühle eine Gegenstrahlmühle verwendet wird.

Insgesamt ist für die wirtschaftliche Betriebsweise des erfindungsgemäßen Verfahrens lediglich eine entsprechende thermische Isolation der Dampfstrahlmühle vorzusehen, wobei zusätzlich die Leitungen für das entsprechend höhere Druckniveau entsprechend dimensioniert werden müssen. Die Vermahlung der Teilchen erfolgt hiebei in einer Wirbelschicht im Inneren der Strahlmühle, wobei aufgrund des Umstandes, daß lediglich Dampf als Treibmittel für die Mühle eingesetzt wird, eine Kontamination des Klinkers und eine Belastung mit Verbrennungsrückständen vermieden wird. Es kann somit insgesamt mit hoher Reinheit und auf hoher Feinheit gemahlen werden.

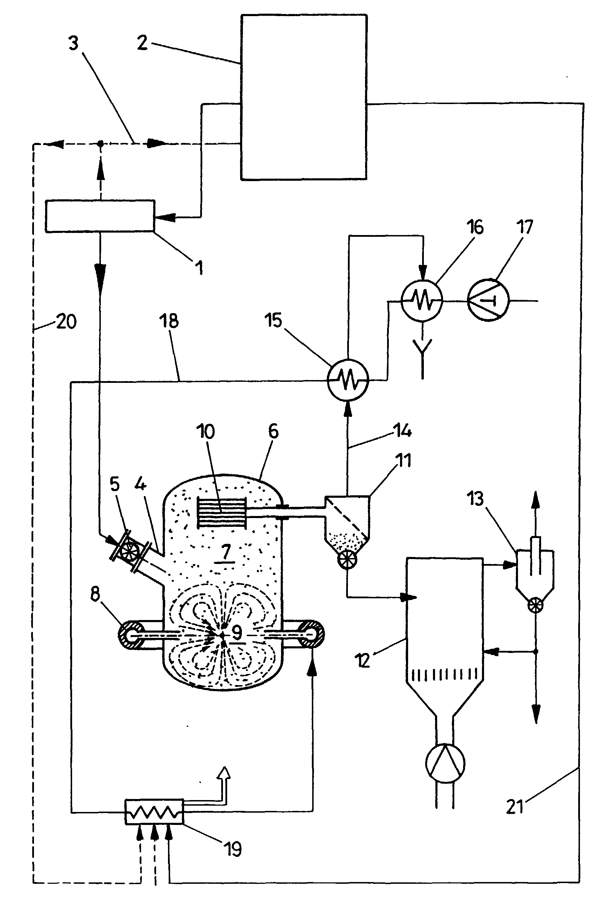

Die Erfindung wird nachfolgend anhand eines in der Zeichnung schematisch dargestellten Ausführungsbeispieles näher erläutert.

In der Zeichnung ist mit 1 ein Klinkerkühler bezeichnet, der Klinker aus einem Klinkerofen 2 unter Erwärmung von Kühlluft Wärme entzieht, wobei die Kühlluft als erhitzte Verbrennungsluft über eine Leitung 3 dem Klinkerofen rückgeführt wird. Der auf eine Temperatur von 250 bis 450° C abgekühlte Klinker wird über einen Aufgabestutzen 4 und eine Zellradschleuse 5 einer Gegenstrahlmühle 6 aufgegeben. Im Inneren der Gegenstrahlmühle 6 wird eine Wirbelschicht 7 ausgebildet, wobei über eine Ringleitung 8 Wasserdampf unter Ausbildung eines Gegenstrommahlraumes 9 eingeblasen wird. Der in die Gegenstrahlmühle 6 eingebrachte Klinker wird im Mahlraum 9 entsprechend zerkleinert, worauf das Mahlgut gemeinsam mit dem Wasserdampf über einen Sichter 10 abgezogen wird. In einem Staubabscheider 11, der als Zyklon oder Filter ausgebildet sein kann, wird das Mahlgut vom Wasserdampf getrennt, worauf das Mahlgut in einem Kühler 12 mittels kalter Luft gekühlt und über einen weiteren Staubabscheider 13 zur Trennung von der Kühlluft ausgetragen wird. Der Wasserdampf wird vom Staubabscheider 11 über eine Leitung 14 abgezogen und über Wärmetauscher 15 und 16 geführt. Das im Wärmetauscher 16 angefallene Kondensat kann dem Speisewasser für die Gegenstrahlmühle zugefügt werden. Das Speisewasser für die Gegenstrahlmühle wird nach einer Druckerhöhung in einer Pumpe 17 auf einen Druck von 10 bis 35 bar über die Leitung 18 über Wärmetauscher 16 und 15, sowie über einen Verdampfer 19 geführt, worauf der Dampf in die Gegenstrahlmühle zur Ausbildung eines Gegenstrommahlraumes 9 eingedüst wird. Dem Verdampfer 19 werden hiebei eine Teilmenge der erwärmten Kühlluft des Klinkerkühlers über eine Leitung 20 als Verbrennungsluft und die dem Klinkerofen 2 über eine Leitung 21 abgezogenen Verbrennungsabgase zur Nachverbrennung gegebenenfalls gemeinsam mit weiterem Brennmaterial zugeführt.

## Patentansprüche

1. Verfahren zum Mahlen von Klinker aus einem Klinkerofen (2), bei welchem der Klinker über einen Klinkerkühler (1) geführt wird und einer Strahlmühle (6) aufgegeben wird, wobei die Kühlluft des Klinkerkühlers (1) als erhitzte Verbrennungsluft dem Klinkerofen (2) rückgeführt wird, dadurch gekennzeichnet, daß der gekühlte Klinker bei Temperaturen von über 250° C einer Dampfstrahlmühle (6) aufgegeben wird, daß der aus der Strahlmühle (6) abgezogene Dampf über einen Wärmetauscher (15) zur Erhitzung von Speisewasser für die Dampfstrahlmühle (6) geführt und kondensiert wird und daß das erhitzte Speisewasser mit den Verbrennungsabgasen des Klinkerofens (2) verdampft und in die Dampfstrahlmühle eingespeist wird.

2. Verfahren nach Anspruch 1, dadurch gekennzeichnet, daß das Speisewasser sowie gegebenenfalls zusätzlich das Kondensat für die Dampferzeugung unter einen Druck von 10 bis 35 bar gesetzt wird.

3. Verfahren nach Anspruch 1 oder 2, dadurch gekennzeichnet, daß der gekühlte Klinker bei Temperaturen zwischen 300° C und 500° C in die Gegenstrahlmühle (6) eingeschleust wird.

4. Verfahren nach Anspruch 1, 2 oder 3, dadurch gekennzeichnet, daß die Verbrennungsabgase des Klinkerofens (2) gegebenenfalls gemeinsam mit Zusatzbrennstoff zur Verdampfung des Speisewassers nachverbrannt bzw. verbrannt werden.

5. Verfahren nach einem der Ansprüche 1 bis 4, dadurch gekennzeichnet, daß die Kühlluft des Klinkerkühlers (1) bei Temperaturen von über 900° C, vorzugsweise über 1000° C, aus dem Kühler (1) abgezogen und dem Klinkerofen (2) sowie gegebenenfalls der Dampferzeugung (19) mit der fühlbaren Wärme als Verbrennungsluft zugeführt wird.

6. Verfahren nach einem der Ansprüche 1 bis 5, dadurch gekennzeichnet, daß als Dampfstrahlmühle (6) eine Gegenstrahlmühle verwendet wird.
